# EUROPÄISCHE PATENTSCHRIFT

(11) **EP 3 948 161 B1**
(45) Veröffentlichungstag und Bekanntmachung des Hinweises auf die Patenterteilung: **07.01.2026**
(21) Anmeldenummer: 20713273.9
(22) Anmeldetag: 20.03.2020
(51) Int. Cl.: G01C 21/34, G01C 21/36

(54) **VERFAHREN ZUR ZIELFÜHRUNG ZU EINER ZIELPERSON, ELEKTRONISCHE VORRICHTUNG DER ZIELPERSON UND ELEKTRONISCHE VORRICHTUNG DES ABHOLERS SOWIE KRAFTFAHRZEUG**
METHOD FOR ROUTE GUIDANCE TO A TARGET PERSON, ELECTRONIC DEVICE OF THE TARGET PERSON AND ELECTRONIC DEVICE OF THE PICK-UP VEHICLE AND MOTOR VEHICLE
PROCÉDÉ DE GUIDAGE CIBLE VERS UNE PERSONNE CIBLE, DISPOSITIF ÉLECTRONIQUE DE LA PERSONNE CIBLE ET DISPOSITIF ÉLECTRONIQUE DU RAMASSEUR AINSI QUE VÉHICULE AUTOMOBILE

(30) Priorität: 28.03.2019 DE 102019204348
(43) Veröffentlichungstag der Anmeldung: 09.02.2022
(73) Patentinhaber: VOLKSWAGEN AKTIENGESELLSCHAFT, 38440 Wolfsburg (DE)
(72) Erfinder: EHMANN, Dr. Sebastian, 38302 Wolfenbüttel (DE)
(86) Internationale Anmeldenummer: PCT/EP2020/057735
(87) Internationale Veröffentlichungsnummer: WO 2020/193392

(56) Entgegenhaltungen:
- WO-A1-2017/155740
- DE-A1- 102016 217 770
- JP-A- 2015 191 641
- US-A1- 2019 017 839

## Beschreibung

Der Vorschlag betrifft das technische Gebiet von Fahrdiensten und Abholdiensten. Es geht darum, die Zielführung bei diesen Diensten zu verbessern. Der Vorschlag betrifft weiterhin eine entsprechend ausgelegte elektronische Vorrichtung der Zielperson sowie eine elektronische Vorrichtung des Abholers sowie ein Kraftfahrzeug.

Zur Zeit wird ebenfalls intensiv an Technologien gearbeitet, die später ein autonomes Fahren ermöglichen sollen. Ein erster Ansatz ist dabei, den Fahrer nicht komplett von seinen Aufgaben zu entlasten, sondern dafür Sorge zu tragen, dass der Fahrer jederzeit die Steuerung des Fahrzeuges übernehmen kann. Der Fahrer nimmt außerdem Überwachungsfunktionen wahr. Durch neuere Technologien im Bereich der Fahrerinformationssysteme wie Head-Up Display ist es möglich, den Fahrer besser über das Geschehen im Umfeld seines Fahrzeuges zu informieren.

Aufgrund der derzeitigen Entwicklung hin zu höheren Autonomiestufen, wo aber viele Fahrzeuge nach wie vor noch vom Fahrer gesteuert werden, ist davon auszugehen, dass entsprechende zusätzliche Informationen mittelfristig bereits für manuell geführte Fahrzeuge und nicht erst langfristig für hochautomatisierte Systeme genutzt werden können. Dabei kann die im Folgenden noch näher beschriebene Lösung sowohl für manuell gesteuerte als auch für automatisch gesteuerte Fahrzeuge eingesetzt werden.

Die meisten Fahrzeuge weisen heute ein Navigationssystem auf, um eine Ziel- und Straßenführung für einen Fahrer vorzusehen. Weiterhin werden Fahrzeuge mit einem darin montierten HUD auf dem Markt angeboten, wobei das HUD gewünschte Informationen auf die Windschutzscheibe eines Fahrzeugs projiziert und dem Fahrer ermöglicht, die projizierten Informationen zu betrachten, während der Fahrer nach vorne blickt.

Für Mobilitätsdienste, ob mit menschlichem Fahrer oder mit autonom fahrenden Fahrzeugen, ist es wichtig, den richtigen Passagier erkennen zu können. Bei Großveranstaltungen oder an bestimmten öffentlichen Plätzen wie Bahnhöfen, Flughäfen usw. können viele Personen auf Abholung warten, sei es durch Taxis, Busse oder andere Fahrdienste, auch Privatpersonen. Wenn nun ein Abholer eintrifft, ist es für den Abholer hilfreich, wenn er durch technische Hilfsmittel unterstützt wird, die richtige Person in der wartenden Personengruppe zu finden. Einige bekannte Lösungen setzen dabei auf Gesichtserkennung. Das wäre auch bei Fahrzeugen einsetzbar, wenn diese mit Umfeldbeobachtungskameras ausgestattet sind. Ein Nachteil dieses Ansatzes besteht darin, dass er nur bei guter Sichtbarkeit der Person und bei vorheriger Übermittlung der Bilddaten der betreffenden Person möglich ist. Von weiterer Distanz wird es schwierig, eine zuverlässige Gesichtserkennung zu machen. Das könnte aber auch auf datenschutzrechtliche Bedenken treffen. Fehlerkennungen sind hier vor allem bei widrigen Wetterbedingungen und durch Tragen bestimmter Kleidung (Mütze, Schals etc.) möglich.

Die klassische Lösung besteht darin, dem Passagier das Kennzeichen des Taxis mitzuteilen und dem Fahrer den Namen der abzuholenden Person. Das ist aber fehleranfällig, falls der Name falsch geschrieben wurde oder ein häufig vorkommender Name ist. Auch wäre es nötig, ein größeres Schild sichtbar hinter der Windschutzscheibe des Fahrzeuges anzubringen. Das Verfahren beruht darauf, dass der Passagier dem Fahrer zuwinkt, wenn er das Fahrzeug oder seinen Namen erkannt hat. Der Fahrer kann den Passagier so nicht erkennen.

Aus der US 2018 / 0196415 A1 ist ein Verfahren für den Fahrgast eines Taxis oder eines anderen Fahrdienstes bekannt, bei dem der Fahrgast eine Fahrtanforderung durch Interaktion mit einer mobilen App seines Smartphones an den Fahrdienst stellt. Die Fahrtanforderung enthält Informationen über einen allgemeinen Zielort für die vom Fahrer gewünschte Abholung, die oft ungenau angegeben wird. Die Fahrtanforderung wird von der mobilen App verarbeitet und dann über das zellulare Telefonnetz oder das Internet an einen zentralen Server weitergeleitet, wo sie weiter verarbeitet wird und dann weitergeleitet wird über das Mobilfunknetz oder das Internet zu dem Fahrer des zugewiesenen Fahrzeugs.

Aus der US 2017 / 153741 A1 ist ein Verfahren und ein System bekannt für die Auffindung einer Zielperson durch ein autonomes Fahrzeug. Das Fahrzeug ist mit Umfeldbeobachtungssensoren ausgestattet (camera, LIDAR, RADAR etc.). Die Zielperson macht dabei durch Gesten auf sich aufmerksam, was durch die Auswertung der Umfeldbeobachtungssensoren erfasst wird.

Die US 2019/017839 A1 richtet sich auf Systeme und Methoden für ein Augmented-Reality-Transportsystem. Die hierin beschriebenen Systeme und Methoden stellen beispielsweise eine Augmented-Reality-Umgebung für einen Fahrer oder einen Beifahrer dar, einschließlich Augmented-Reality-Elementen, um bestimmte Orte innerhalb einer Darstellung der realen Umgebung zu markieren. Darüber hinaus analysieren die hier beschriebenen Systeme und Methoden historische Informationen, um Platzierungen für Augmented-Reality-Elemente zu bestimmen. Die Systeme und Methoden ermöglichen es einem Benutzer auch, eine Augmented-Reality- oder Virtual-Reality-Umgebung mit einem anderen Benutzer zu teilen.

Die WO 2017/155740 A1 offenbart Systeme und Verfahren zur automatischen Erkennung eines Transportkunden vorgestellt. Eine Ausführungsform hat die Form eines Verfahrens, bei dem ein autonomes Fahrzeug, während es sich in einer Abholzone für einen Fahrgast befindet, eine Gestenausführungsanforderung an ein Benutzergerät des Fahrgastes sendet.

Dennoch weisen die bisher bekannten Ansätze auch verschiedene Probleme auf, für die zum jetzigen Zeitpunkt keine Lösungen bekannt sind. Speziell die Identifikation einer Person von größerer Entfernung, die sich in einer größeren Personengruppe befindet, wo es also vorkommt, dass mehrere Personen die gleiche Geste vollziehen, stößt auf Schwierigkeiten. Dies wurde im Rahmen der Erfindung erkannt.

Es besteht also der Bedarf für weitere Verbesserungen bei der Zielführung zu einer Zielperson, wobei Abholer und Zielperson in geeigneter Form interagieren.

Die Erfindung setzt sich zur Aufgabe, eine Lösung zur Interaktion und zur verbesserten Zielführung anzugeben. Diese Lösung soll auch bei Mobilitätslösungen wie Fahrdiensten, Taxis, Mitfahrzentralen einsetzbar sein.

Diese Aufgabe wird durch ein Verfahren zur Zielführung zu einer Zielperson gemäß Anspruch 1, eine elektronische Vorrichtung des Abholers gemäß Anspruch 2 sowie ein Kraftfahrzeug gemäß Anspruch 3 gelöst.

Die abhängigen Ansprüche beinhalten vorteilhafte Weiterbildungen und Verbesserungen der Erfindung entsprechend der nachfolgenden Beschreibung dieser Maßnahmen.

Die vorgeschlagene Lösung besteht in einem Verfahren zur Zielführung zu einer Zielperson, bei dem ein Abholer zu der Zielperson geführt wird, wobei Abholer und Zielperson mit elektronischen Vorrichtungen ausgestattet sind, die in der Lage sind, miteinander zu kommunizieren. Dabei wird seitens der elektronischen Vorrichtung der Zielperson eine Abholanfrage gesendet, die entweder direkt an den Abholer übertragen wird oder indirekt über einen Zentralrechner eines Abholdienstes zu dem Abholer weitergeleitet wird. Von der elektronischen Vorrichtung des Abholers wird eine Navigationsroute zum Abholort der Zielperson berechnet und die Zielführung gemacht. Wenn erkannt wird, dass sich der Abholer dem Abholort nähert, wird von der elektronischen Vorrichtung des Abholers eine Aufforderung zur elektronischen Vorrichtung der Zielperson gesendet, mit der die Zielperson zur Vollziehung einer Geste aufgefordert wird. Die Vollziehung der Geste wird dann von der elektronischen Vorrichtung des Abholers beobachtet. Seitens der elektronischen Vorrichtung der Zielperson werden die Bewegungsdaten bei Vollziehung der Geste erfasst und an die elektronische Vorrichtung des Abholers übertragen. Von der elektronischen Vorrichtung des Abholers werden die Daten von wenigstens einem Umfeldbeobachtungssensor auf typische Bewegungsmuster hin ausgewertet, die der Vollziehung der Geste entsprechen, die angefordert wurde. Bei mehreren Erfassungen von Bewegungsmustern dieser Geste werden die einzelnen Gestenerfassungen mit den übertragenen Bewegungsdaten verglichen und es wird diejenige Gestenerfassung der Zielperson zugeordnet, die die geringste Abweichung von dem übertragenen Bewegungsmuster aufweist. Der Abholer holt die Person an der Stelle ab, wo sich diese Zielperson befindet. Das Verfahren hat den Vorteil, dass die Zielperson, selbst wenn sie sich in einer Menschenmenge aufhält, leichter identifiziert bzw. lokalisiert werden kann.

Eine erfindungsgemäße
Maßnahme besteht darin, wenn in der elektronischen Vorrichtung der Zielperson von den erfassten Bewegungsdaten charakteristische Größen abgeleitet werden, die zu der elektronischen Vorrichtung des Abholers übertragen werden, und wobei von der elektronischen Vorrichtung des Abholers von den ihrerseits erfassten Bewegungsdaten die charakteristischen Größen abgeleitet werden und mit den übertragenen charakteristischen Größen verglichen werden. Auf diese Weise brauchen weniger Daten ausgetauscht zu werden und auch der Aufwand für die Auswertung der Daten wird verringert.

Erfindungsgemäß entspricht die Geste, zu deren Vollziehung die Zielperson aufgefordert wird, einer Wink-Geste, wobei die abgeleiteten Größen wenigstens der Winkfrequenz und/oder der Winkamplitude entsprechen. Die Winkgeste führt zu einer charakteristischen Bewegung, die einfach mit Bildverarbeitungsmaßnahmen erfasst werden kann.

Erfindungsgemäß wird von der elektronischen Vorrichtung des Abholers eine AR-Einblendung entsprechend "augmented reality"-Einblendung berechnet, durch die der Ort der Zielperson für den Abholer markiert wird.

Der Vorschlag betrifft auch eine elektronische Vorrichtung der Zielperson zur Verwendung bei dem Verfahren. Es ist vorteilhaft, wenn diese Vorrichtung mit einem Kommunikationsmodul und wenigstens einem Bewegungserfassungssensor ausgestattet wird. Dabei ist das Kommunikationsmodul zum Empfang einer an die Zielperson gerichteten Aufforderung zur Vollziehung einer Geste ausgelegt und zur Übertragung der von dem wenigstens einen Bewegungserfassungssensor gelieferten Bewegungsdaten bei Vollziehung der Geste an die elektronische Vorrichtung des Abholers.

Des Weiteren ist es vorteilhaft, wenn die elektronische Vorrichtung mit einer Recheneinheit ausgestattet ist, die ausgelegt ist, von den erfassten Bewegungsdaten charakteristische Größen abzuleiten, und das Kommunikationsmodul ausgestattet ist, die charakteristischen Größen an die elektronische Vorrichtung des Abholers zu übertragen.

Die elektronische Vorrichtung kann in vorteilhafter Weise als Smartwatch oder als Smartphone ausgelegt sein. Die Smartwatch wird automatisch mitbewegt, wenn die Winkgeste mit dem entsprechenden Arm vollzogen wird. Das Smartphone kann leicht in der Hand gehalten werden, mit der die Winkgeste vollzogen wird.

Der Vorschlag betrifft weiterhin eine elektronische Vorrichtung des Abholers zur Verwendung bei dem Verfahren gemäß Anspruch 2.

Die Vorrichtung kann vorteilhaft als Datenbrille oder Smartphone oder als Teil eines Infotainmentsystems eines Fahrzeuges ausgelegt werden.

Der Vorschlag betrifft auch ein Kraftfahrzeug, das eine elektronische Vorrichtung des Abholers aufweist.

Wenn die Vorrichtung als Datenbrille ausgelegt ist, lässt sich das erfindungsgemäße Verfahren selbst bei Fußgängern, Radfahrern, Kradfahrern usw. einsetzen.

Ausführungsbeispiele der Erfindung sind in den Zeichnungen dargestellt und werden nachfolgend anhand der Figuren näher erläutert.

Es zeigen:
- Fig. 1: das Prinzip der Einblendung von Informationen in das Sichtfeld des Fahrers eines Fahrzeuges während der Fahrt mit Hilfe eines Head-Up Displays;
- Fig. 2: das typische Cockpit eines Fahrzeuges;
- Fig. 3: ein Blockschaltbild des Infotainmentsystems des Fahrzeuges;
- Fig. 4: eine Darstellung einer AR-Einblendung für den Fahrer eines Abholdienstes bei Annäherung an den Abholort;
- Fig. 5: eine qualitative Prinzipdarstellung der Funktionsweise zum Auffinden der winkenden Zielperson gemäß der Erfindung;
- Fig. 6: eine quantitative Prinzipdarstellung der Funktionsweise zum Auffinden der winkenden Zielperson gemäß der Erfindung;
- Fig. 7: ein Ablaufdiagramm für ein Programm zur Erfassung der Bewegungsdaten beim Winken durch ein persönliches elektronisches Gerät der Zielperson; und
- Fig. 8: ein Ablaufdiagramm für ein Programm zur Erfassung der Winkbewegung der Zielperson durch ein elektronisches Gerät des Abholers.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

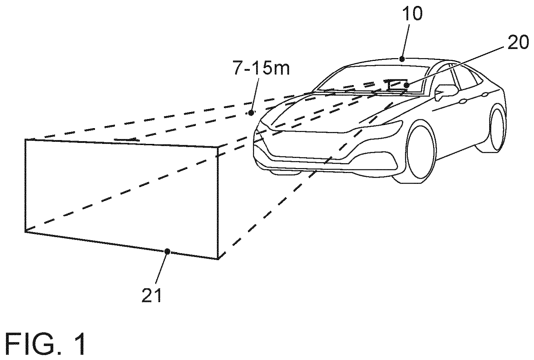

Fig. 1 veranschaulicht die prinzipielle Funktionsweise eines Head-Up Displays. Das Head-Up Display 20 ist im Fahrzeug 10 unterhalb/hinter dem Kombiinstrument im Armaturenbrettbereich angebracht. Durch Projektion auf die Windschutzscheibe werden Zusatzinformationen in das Sichtfeld des Fahrers eingeblendet. Diese Zusatzinformationen erscheinen so, als seien sie auf eine Projektionsfläche 21 im Abstand von 7 - 15 m vor dem Fahrzeug 10 projiziert. Durch diese Projektionsfläche 21 hindurch bleibt aber die reale Welt sichtbar. Mit den eingeblendeten Zusatzinformationen wird quasi eine virtuelle Umgebung erzeugt. Die virtuelle Umgebung wird theoretisch über die reale Welt gelegt und enthält die virtuellen Objekte, die den Fahrer bei der Fahrt unterstützen und informieren. Es wird aber nur auf einen Teil der Windschutzscheibe projiziert, so dass die Zusatzinformationen nicht beliebig im Sichtfeld des Fahrers angeordnet werden können.

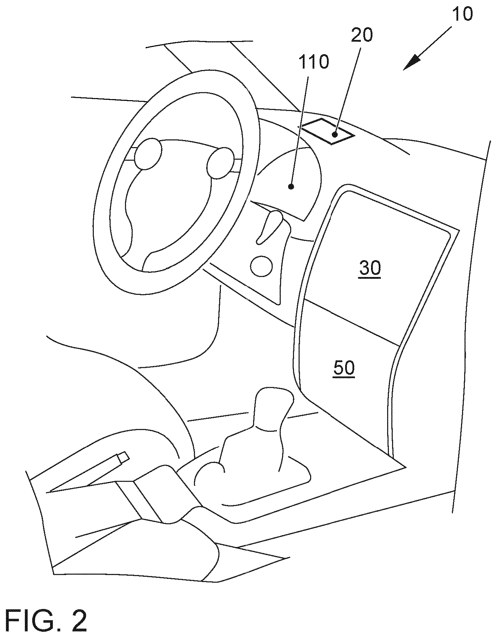

Fig. 2 zeigt das Cockpit des Fahrzeuges 10. Dargestellt ist ein Personenkraftwagen Pkw. Als Fahrzeug 10 kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Landmaschinen, Baumaschinen, Schienenfahrzeuge usw. Der Einsatz der Erfindung wäre allgemein bei Landfahrzeugen, Schienenfahrzeugen, Wasserfahrzeugen und Luftfahrzeugen möglich.

In dem Cockpit sind drei Anzeigeeinheiten eines Infotainment-Systems mit Bezugszeichen hervorgehoben. Es handelt sich um das Head-Up-Display 20 und einen berührungsempfindlichen Bildschirm 30, der in der Mittelkonsole angebracht ist. Bei der Fahrt liegt die Mittelkonsole nicht im Sichtfeld des Fahrers. Deshalb werden die Zusatzinformationen während der Fahrt nicht auf der Anzeigeeinheit 30 eingeblendet. Daneben ist noch das übliche Kombiinstrument 110 im Armaturenbrett gezeigt.

Der berührungsempfindliche Bildschirm 30 dient dabei insbesondere zur Bedienung von Funktionen des Fahrzeugs 10. Beispielsweise können darüber ein Radio, ein Navigationssystem, eine Wiedergabe von gespeicherten Musikstücken und/oder eine Klimaanlage, andere elektronische Einrichtungen oder andere Komfortfunktionen oder Applikationen des Fahrzeugs 10 gesteuert werden. Zusammengefasst wird häufig von einem "Infotainmentsystem" gesprochen. Ein Infotainmentsystem bezeichnet bei Kraftfahrzeugen, speziell Pkw, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort, zusammengesetzt aus den Worten Information und Entertainment (Unterhaltung). Zur Bedienung des Infotainmentsystems wird hauptsächlich der berührungsempfindliche Bildschirm 30 ("Touchscreen") benutzt, wobei dieser Bildschirm 30 insbesondere von einem Fahrer des Fahrzeugs 10, aber auch von einem Beifahrer des Fahrzeugs 10 gut eingesehen und bedient werden kann. Unterhalb des Bildschirms 30 können zudem mechanische Bedienelemente, beispielsweise Tasten, Drehregler oder Kombinationen hiervon, wie beispielsweise Drückdrehregler, in einer Eingabeeinheit 50 angeordnet sein. Typischerweise ist auch eine Lenkradbedienung von Teilen des Infotainmentsystems möglich. Diese Einheit ist nicht separat dargestellt, sondern wird als Teil der Eingabeeinheit 50 betrachtet.

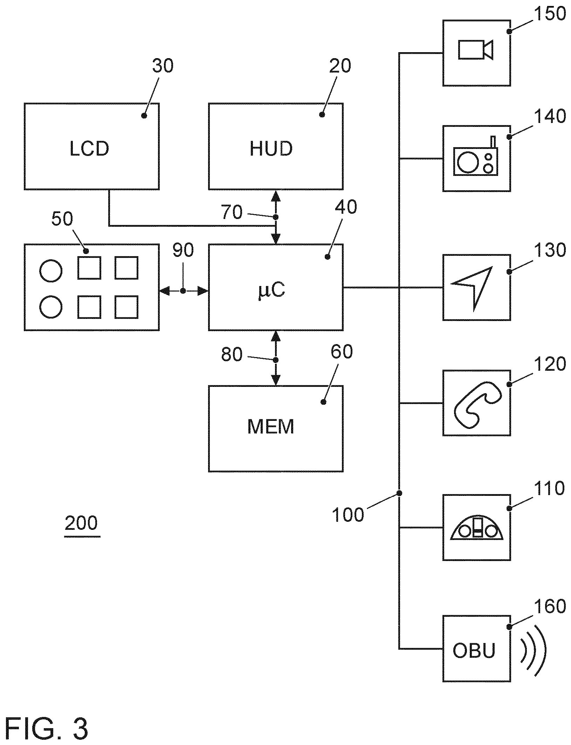

Fig. 3 zeigt schematisch ein Blockschaltbild des Infotainmentsystems 200 sowie beispielhaft einige Teilsysteme oder Applikationen des Infotainmentsystems. Die BedienungsVorrichtung umfasst die berührungsempfindliche Anzeigeeinheit 30, eine Recheneinrichtung 40, eine Eingabeeinheit 50 und einen Speicher 60. Die Anzeigeeinheit 30 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Die Anzeigeeinheit 30 ist über eine Datenleitung 70 mit der Recheneinrichtung 40 verbunden. Die Datenleitung kann nach dem LVDS-Standard ausgelegt sein, entsprechend Low Voltage Differential Signalling. Über die Datenleitung 70 empfängt die Anzeigeeinheit 30 Steuerdaten zum Ansteuern der Anzeigefläche des Touchscreens 30 von der Recheneinrichtung 40. Über die Datenleitung 70 werden auch Steuerdaten der eingegebenen Befehle von dem Touchscreen 30 zu der Recheneinrichtung 40 übertragen. Mit der Bezugszahl 50 ist die Eingabeeinheit bezeichnet. Ihr zugehörig sind die schon erwähnten Bedienelemente wie Tasten, Drehregler, Schieberegler, oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion usw.

Die Speichereinrichtung 60 ist über eine Datenleitung 80 mit der Recheneinrichtung 40 verbunden. In dem Speicher 60 ist ein Piktogrammverzeichnis und/oder Symbolverzeichnis hinterlegt mit den Piktogrammen und/oder Symbolen für die möglichen Einblendungen von Zusatzinformationen.

Die weiteren Teile des Infotainmentsystems Kamera 150, Radio 140, Navigationsgerät 130, Telefon 120 und Kombiinstrument 110 sind über den Datenbus 100 mit der Vorrichtung zur Bedienung des Infotainmentsystems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems wie BroadR-Reach in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). Hier wird noch erwähnt, dass die Kamera 150 als konventionelle Videokamera ausgelegt sein kann. In diesem Fall nimmt sie 25 Vollbilder/s auf, was bei dem Interlace-Aufnahmemodus 50 Halbbilder/s entspricht. Alternativ kann eine Spezialkamera eingesetzt werden, die mehr Bilder/s aufnimmt, um die Genauigkeit der Objekterkennung bei sich schneller bewegenden Objekten zu erhöhen. Es können mehrere Kameras zur Umfeldbeobachtung eingesetzt werden. Daneben könnten auch die schon erwähnten RADAR- oder LIDAR-Systeme ergänzend oder alternativ eingesetzt werden, um die Umfeldbeobachtung durchzuführen oder zu erweitern. Für die drahtlose Kommunikation nach innen und außen ist das Fahrzeug 10 mit einem Kommunikationsmodul 160 ausgestattet. Dieses Modul wird oft auch als On-Board Unit bezeichnet. Es kann für die Mobilfunk-Kommunikation, z.B. nach LTE Standard, entsprechend Long Term Evolution, ausgelegt sein. Ebenfalls kann es für WLAN-Kommunikation, entsprechend Wireless LAN, ausgelegt sein, sei es für die Kommunikation zu Geräten der Insassen im Fahrzeug oder für die Fahrzeug-zu-Fahrzeug Kommunikation oder für die Fahrzeug-zu-Infrastruktur-Kommunikation etc.

Das erfindungsgemäße Verfahren zum Auffinden einer Zielperson, insbesondere für einen Abholservice, wird im Folgenden anhand von einem Ausführungsbeispiel ausführlich erläutert. Dabei werden auch alternative Ausführungsformen diskutiert.

Für die weiteren Figuren gilt, dass gleiche Bezugszahlen die gleichen Felder und Symbole bezeichnen wie bei der Beschreibung der Figuren 1 bis 3 erläutert.

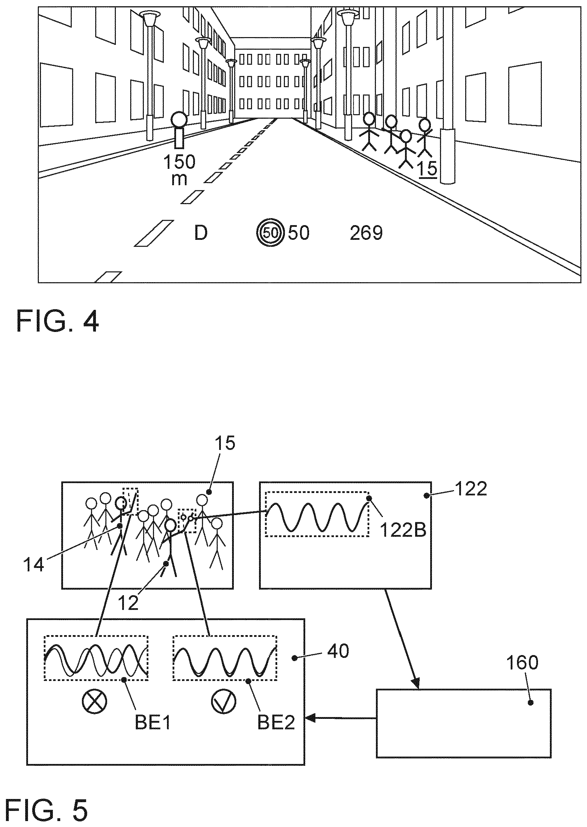

Die Fig. 4 zeigt das typische das Problem bei der Abholung einer Zielperson. Dabei zeigt die Fig. 4 den Blick des Abholers durch die Windschutzscheibe, der mit dem Taxi unterwegs ist. Wie beschrieben, ist das Fahrzeug mit HUD 20 ausgestattet. Die im Bild von Fig. 4 eingeblendeten Informationen werden von dem HUD 20 erzeugt und erscheinen durch Projektion im Sichtfeld des Fahrers. Eine Einblendung betrifft die Distanz bis zum geplanten Abholort. Dort wird angegeben, dass der Taxistand nur noch 150 m entfernt ist. Darüber wird eine Grafik eingeblendet, die aus einem Längsbalken besteht, der in einem Kreis endet zur Kennzeichnung, dass der Zielort an dieser Stelle erreicht ist.

Wenn die Zielperson für den Abholer an sich unbekannt ist, wird es schwierig, den genauen Ort zu lokalisieren, wo sich die Zielperson befindet. Das ist insbesondere dann der Fall, wenn sich die Zielperson in einer Menschenmenge aufhält, z.B. an einem Ort, wo sich viele Personen aufhalten, um abgeholt zu werden. In Fig. 4 ist als Beispiel ein Taxistand gezeigt. Dort warten verschiedene Personen 15 auf Abholung durch ihre bestellten Taxis. Andere typische Orte, wo Personen auf Abholung warten, sei es durch Taxis oder andere Fahrdienste oder durch Privatpersonen sind z.B. Bushaltestellen, Parkplätze, Tankstellen, Raststätten usw. Im gezeigten Beispiel sind nur 4 Personen 15 dargestellt, die am Taxistand warten. Diese Personengruppe 15 kann aber auch wesentlich größer sein. Speziell, wenn der Taxistand an öffentlichen Einrichtungen lokalisiert ist, wie z.B. Bahnhöfen, Flughäfen, Veranstaltungshallen, Stadien usw., werden zu Stoßzeiten wesentlich größere Personengruppen auf Abholung warten. Dann ist das Problem, die richtige Zielperson aufzufinden, größer. Das Problem wird auch dadurch erschwert, dass ja mehrere ggfs. alle Personen auf Abholung warten. Diese können alle ein Taxi bestellt haben, von dem sie nicht genau wissen, wann es kommt. Da sich die bestellten Taxis äußerlich kaum unterscheiden, wird es für die Zielperson auch schwierig festzustellen, ob ein ankommendes Taxi für sie selber oder eine andere Zielperson kommt. Im Zweifel werden mehrere Personen 15 winken, um auf sich aufmerksam zu machen.

Die prinzipielle Funktionsweise des erfindungsgemäßen Verfahrens, wie jetzt die Zielperson in der Personengruppe ausfindig gemacht werden kann, ist in der Fig. 5 gezeigt. Bei der Personengruppe 15 sind zwei Personen 12 und 14 hervorgehoben. Beide Personen 12 und 14 sind winkend dargestellt. Die Person 12 betrifft die eigentliche Zielperson, die das Taxi bestellt hat. Die Zielperson 12 trägt eine Smartwatch 122. Wie bekannt, sind Smartwatches elektronische Uhren, die mit Funkkommunikationsmitteln, verschiedenen Sensoren, Speicher und einem leistungsfähigen Prozessor ausgestattet sind. Typischerweise sind die Kommunikationsmittel für WLAN-Kommunikation, für die Teilnahme an einem Mobilfunk-Kommunikationsdienst z.B. LTE entsprechend Long Term Evolution und ggfs. weiteren Kommunikationsdiensten wie Bluetooth ausgestattet. Da beide Personen 12 und 14 winken, wird es für den ankommenden Taxifahrer schwierig, die Zielperson 12 zu lokalisieren.

Vorschlagsgemäß werden die Umgebungssensoren und das HUD 20 dafür eingesetzt, die Zielperson 15 zu identifizieren. Als Umgebungssensor wird im Beispiel die Frontkamera 150 eingesetzt. Diese müssen aber unterstützt werden, um diese Aufgabe zu bewältigen. Dies geschieht wie folgt: Die Zielperson 12 hat das Taxi mit Hilfe der Smartwatch, alternativ dem Smartphone, gerufen. Die Taxizentrale hat die Identifikation der Smartwatch an das gebuchte Taxi weitergegeben. Es wird eine Verbindung zwischen Smartwatch und Taxi über Mobilfunk aufgebaut. Im Taxi wird die gebuchte Fahrt in das Navigationssystem 130 übernommen. Dem Taxifahrer wird die Navigationsroute für die gebuchte Fahrt angezeigt. Bei Annäherung des Taxis an den Abholort fordert das Taxi die Zielperson 12 auf, sich durch Winken optisch bemerkbar zu machen. Dies wird der Zielperson 12 über die Smartwatch angezeigt. Die Zielperson 12 fängt an zu winken. Die Beschleunigungssensoren in der Smartwatch 122 erfassen die Winkbewegung. Die Daten des erfassten Bewegungsmusters 122B werden über Mobilfunk an das Taxi übermittelt. Wie dargestellt, empfängt das Kommunikationsmodul 160 diese Daten und legt sie im Speicher 60 ab. Die Kamera 150 beobachtet die Umgebung. In der Recheneinheit 40 werden die gelieferten Videobilder durch Bewegungserkennungsalgorithmen ausgewertet. Solche Algorithmen sind im Stand der Technik bereits bekannt. Zu deren Abarbeitung muss allerdings ein entsprechend leistungsfähiger Rechner eingesetzt werden. Die Recheneinheit 40 vergleicht die erkannten Bewegungsmuster mit dem von der Smartwatch 122 übermittelten Bewegungsmuster 122B. Fig. 5 zeigt zwei erkannte Bewegungsmuster, die von den beiden winkenden Personen 12 und 14 stammen. Darüber gelegt ist jeweils das übermittelte Bewegungsmuster 122B. Bei dieser Darstellung wird schon qualitativ erkennbar, dass der Bewegungsmustervergleich BE1 große Abweichungen beinhaltet, hingegen der Bewegungsmustervergleich BE2 große Übereinstimmung liefert. Die Analyse ergibt deshalb, dass die Person 12 die eigentliche Zielperson ist und über das HUD 20 wird die Zielperson 12 markiert. Dies kann in einer Variante durch Umrandung der Zielperson 12 geschehen. Das Taxi kann so die richtige Stelle zur Abholung anfahren.

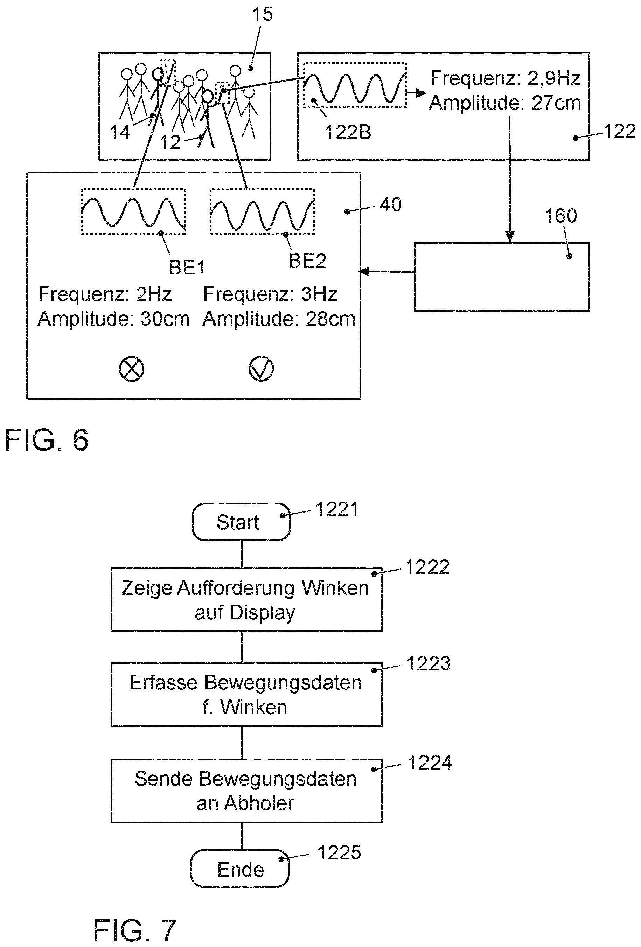

Fig. 6 zeigt ein zweites Ausführungsbeispiel mit dem Unterschied, dass nicht die kompletten Bewegungsdaten zu dem Taxi übermittelt werden, sondern nur die quantitativen Größen für Frequenz der Bewegung und Amplitude der Bewegung. Für die Frequenz wird ein Wert von 2,9 Hz gemessen und übermittelt und für die Amplitude ein Wert von 27 cm. Bei den durch Kameraauswertung ermittelten Bewegungen ergeben sich die charakteristischen Werte 2 Hz, 30 cm und 3 Hz, 28 cm für Frequenz und Amplitude. Die Genauigkeit der Bewegungserkennung ist insbesondere für die Erkennung der Amplitude der Bewegung nicht so hoch. Es wird aber immer diejenige Bewegung als übereinstimmend gewählt, die im Rahmen festgelegter Toleranzwerte die geringste Abweichung hat.

Fig. 7 zeigt ein Flussdiagramm für ein Programm, das zur Abarbeitung in der Recheneinheit der Smartwatch 122 kommt, wenn das Abholer-Fahrzeug nur noch eine bestimmte Entfernung, z.B. 150 m, von dem Abholort entfernt ist. Das Programm wird dann automatisch gestartet, wenn die Annäherung per Funk zur Smartwatch 122 übermittelt wurde. Das Programm startet im Programmschritt 1221. Im Programmschritt 1222 wird der Zielperson 12 eine Aufforderung angezeigt, dass sie sich durch Winken bemerkbar machen soll. Diese Aufforderung kann auf dem Display der SW 122 angezeigt werden. Zusätzlich oder alternativ kann eine Sprachausgabe oder ein haptisches Signal, z.B. Vibrationssignal, ausgegeben werden. Im Programmschritt 1223 findet die Erfassung der Bewegungsdaten während des Winkvorgangs statt. Typische Beschleunigungssensoren, die solche Bewegungen erfassen können, sind MEMS-Beschleunigungs- und Gyrosensoren (mikro-elektro-mechanische Systeme). Sie können auch mit Halbleitermaterialen (Silizium) gefertigt werden. Je nach Ausführungsbeispiel werden die gemessenen Bewegungsdaten bzw. die bereits ausgewerteten Bewegungsdaten im Programmschritt 1224 an das Abholer-Fahrzeug 10 übermittelt. Das Programm endet im Programmschritt 1225.

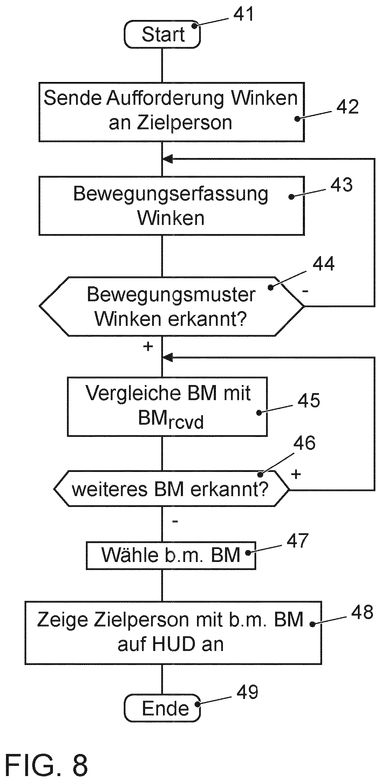

Fig. 8 zeigt ein Flussdiagramm für ein Programm, das in der Recheneinheit 40 des Fahrzeuges 10 zur Abarbeitung kommt. Dieses Programm wird im Programmschritt 41 gestartet, wenn sich das Abholer-Fahrzeug 10 bis auf eine Entfernung von z.B. 150 m an den Abholort angenähert hat. Die Route wird ja vom Navigationssystem 130 geliefert. Das Navigationssystem 130 ist bekanntermaßen mit GNSS-Modul ausgestattet, entsprechend Global Navigation Sattelite System, über das es über seine genaue Position informiert ist. Im Programmschritt 42 sendet das Fahrzeug 10 über das Kommunikationsmodul 160 eine Aufforderung zum Winken an die verbundene Smartwatch 122 der Zielperson 12. Im Programmschritt 43 wird der Algorithmus zur Auswertung der von der Kamera 150 gelieferten Videobilder gestartet. Solche Algorithmen sind an sich bekannt und werden z.B. bei Spielkonsolen eingesetzt. Ebenfalls sind verschiedene Algorithmen zur Gestenerkennung bekannt, die ebenfalls auf Auswertung von Videobildern beruhen. In Abfrage 44 wird überprüft, ob ein typisches Bewegungsmuster für einen Winkvorgang erkannt wurde. Falls nicht, verzweigt das Programm zurück zum Schritt 43 zur weiteren Bewegungserfassung. Wurde ein Winkvorgang detektiert, findet in dem Programmschritt 45 ein Vergleich der erfassten Bewegungsdaten mit den zuvor von der Smartwatch 122 übermittelten Bewegungsdaten statt. In Abfrage 46 wird überprüft, ob noch ein weiterer Winkvorgang erfasst wurde. Falls ja, verzweigt das Programm zurück zum Programmschritt 45 und es wird erneut verglichen. Wenn nachfolgend in Abfrage 46 festgestellt wird, dass kein weiterer Winkvorgang erfasst wurde, schließt sich in Schritt 47 ein Programmschritt an, in dem das am besten passende Bewegungsmuster von den erfassten Bewegungsmustern für Winkvorgänge ausgewählt wird. Bei dem in Fig. 6 dargestellten Ausführungsbeispiel brauchen lediglich die Abweichungen von den extrahierten Werten für Frequenz und Amplitude miteinander verglichen zu werden. Dabei kann die Abweichung in der Frequenz höher gewichtet werden als die der Amplitude. Im Ausführungsbeispiel gem. Fig. 5 kann die Summe der einzelnen Abweichungsquadrate für die Messwerte gebildet werden. Je kleiner die Summe ist, desto besser ist die Übereinstimmung. Das Bewegungsmuster mit der geringsten Abweichung wird als zur Zielperson 12 zugehörig bestimmt. Es erfolgt danach im Programmschritt 48 die Markierung der Zielperson 12 mit dem HUD 20. Dem Fahrer wird so angezeigt, an welcher Stelle der Personengruppe die Zielperson 12 befindlich ist, und er kann sie dort abholen. Das Programm endet im Programmschritt 49.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können. Das in den Patentansprüchen genannte Objekt kann ausdrücklich auch eine Person sein.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und/oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

Für Situationen, in denen weniger Personen anwesend sind, können auch Daten von Gesten, die die Zielperson unbewusst durchführt, zur Identifikation genutzt werden. Beispielsweise lässt sich aus den Beschleunigungssensordaten eines Smartphones, das in einer Tasche getragen wird (oder eben aus Daten der Smartwatch am Arm), die Schrittfrequenz extrahieren, wenn die Zielperson sich bewegt. Das automatische Fahrzeug kann dann die Schrittfrequenz aller Passanten ermitteln und den Passagier identifizieren, auch wenn sich dieser aktuell nicht aktiv auf der Suche nach seinem Fahrzeug befindet.

Die Erfindung kann immer dann eingesetzt werden, wenn mit AR-Einblendungen das Sichtfeld eines Fahrers, einer Bedienperson oder auch einfach nur einer Person mit Datenbrille angereichert werden kann.

### Bezugszeichenliste

- 10: Fahrzeug
- 12: Zielperson
- 14: andere Person
- 15: Personengruppe
- 20: Head-Up Display HUD
- 21: virtuelle Projektionsfläche
- 30: berührungsempfindliche Anzeigeeinheit
- 40: Recheneinheit
- 41 - 49: verschiedene Programmschritte für Abholer
- 50: Eingabeeinheit
- 60: Speichereinheit
- 70: Datenleitung zur Anzeigeeinheit
- 80: Datenleitung zur Speichereinheit
- 90: Datenleitung zur Eingabeeinheit
- 100: Datenbus
- 110: Kombiinstrument
- 120: Telefon
- 122: Smartwatch
- 122B: Bewegungsmuster
- 130: Navigationsgerät
- 140: Radio
- 150: Kamera
- 160: Kommunikationsmodul
- 200: Infotainment-System
- 1221 - 1225: verschiedene Programmschritte für Zielperson
- BE1: 1. Bewegungserkennungsvergleich
- BE2: 2. Bewegungserkennungsvergleich

## Patentansprüche

1. Verfahren zur Zielführung zu einer Zielperson, bei dem ein Abholer zu der Zielperson geführt wird, wobei Abholer und Zielperson (12) mit elektronischen Vorrichtungen (200, 122) ausgestattet sind, die in der Lage sind, miteinander zu kommunizieren, wobei seitens der elektronischen Vorrichtung (122) der Zielperson (12) eine Abholanfrage gesendet wird, die entweder direkt an den Abholer übertragen wird oder indirekt über einen Zentralserver eines Abholdienstes zu dem Abholer weitergeleitet wird, wobei die elektronische Vorrichtung (200) des Abholers eine Navigationsroute zum Abholort der Zielperson (12) berechnet, wobei von der elektronischen Vorrichtung des Abholers (200) bei Annäherung an den Abholort eine Aufforderung zur elektronischen Vorrichtung (122) der Zielperson (12) gesendet wird, mit der die Zielperson (12) zur Vollziehung einer Geste aufgefordert wird, wobei seitens der elektronischen Vorrichtung (122) der Zielperson (12) die Bewegungsdaten bei Vollziehung der Geste erfasst werden und an die elektronische Vorrichtung (200) des Abholers übertragen werden, wobei von der elektronischen Vorrichtung (200) des Abholers die Daten von wenigstens einem Umfeldbeobachtungssensor (150) auf typische Bewegungsmuster ausgewertet werden, die der Vollziehung der Geste entsprechen, wobei bei mehreren Erfassungen von Bewegungsmustern dieser Geste die einzelnen Gestenerfassungen mit den übertragenen Bewegungsdaten verglichen werden und diejenige Gestenerfassung der Zielperson (12) zugeordnet wird, die die geringste Abweichung von dem übertragenen Bewegungsmuster aufweist, **dadurch gekennzeichnet, dass** von der elektronischen Vorrichtung (200) des Abholers eine Einblendung für eine Grafik auf einem Head-Up Display so berechnet wird, dass durch diese der Ort der Zielperson (12) markiert werden kann und die Grafik von dem Head-Up Display so in das Sichtfeld des Fahrers projiziert wird, dass der Ort der Zielperson (12) markiert wird, wobei in der elektronischen Vorrichtung (122) der Zielperson (12) von den erfassten Bewegungsdaten charakteristische Größen abgeleitet werden, die zu der elektronischen Vorrichtung (200) des Abholers übertragen werden, und wobei von der elektronischen Vorrichtung (200) des Abholers von den ihrerseits erfassten Bewegungsdaten die charakteristischen Größen abgeleitet werden und mit den übertragenen charakteristischen Größen verglichen werden, wobei die Geste, zu deren Vollziehung die Zielperson (12) aufgefordert wird, einer Wink-Geste entspricht und wobei die abgeleiteten Größen wenigstens der Winkfrequenz und der Winkamplitude entsprechen, wobei die Winkfrequenz und die Winkamplitude der Bewegungsmuster miteinander verglichen werden und dabei eine Abweichung in der Winkfrequenz höher gewichtet wird als eine Abweichung in der Winkamplitude..

2. Elektronische Vorrichtung des Abholers zur Verwendung bei dem Verfahren nach Anspruch 1, mit einem Kommunikationsmodul (160), einem Navigationssystem (130), einer Recheneinheit (40), wenigstens einem Umfeldbeobachtungssensor (150) und einem Head-Up Display (20), wobei das Navigationssystem (130) zur Berechnung einer Route zum Abholort der Zielperson (12) ausgelegt ist und das Kommunikationsmodul (160) dafür ausgelegt ist, bei Annäherung an den Abholort eine Aufforderung zur elektronischen Vorrichtung (122) der Zielperson (12) zu senden, mit der die Zielperson zur Vollziehung einer Geste aufgefordert wird, wobei das Kommunikationsmodul (150) weiterhin ausgelegt ist, von der elektronischen Vorrichtung (122) der Zielperson (12) die Bewegungsdaten bei Vollziehung der Geste zu empfangen, wobei die Recheneinheit (40) ausgelegt ist, aus den von dem Umfeldbeobachtungssensor (150) gelieferten Daten die Bewegungsmuster zu extrahieren, die der Vollziehung der Geste entsprechen und mit den empfangenen Bewegungsdaten zu vergleichen und wobei die Recheneinheit (40) weiterhin so ausgelegt ist, bei mehreren Erfassungen von Bewegungsmustern dieser Geste die einzelnen Gestenerfassungen mit den empfangenen Bewegungsdaten zu vergleichen und diejenige Gestenerfassung der Zielperson (12) zuzuordnen, die die geringste Abweichung von dem übertragenen Bewegungsmuster aufweist, **dadurch gekennzeichnet, dass** die Recheneinheit (40) weiterhin so ausgelegt ist, eine Einblendung für eine Grafik auf dem Head-Up Display (20) so zu berechnen, dass durch diese der Ort der Zielperson (12) markiert werden kann und wobei das Head-Up Display (20) so ausgelegt ist, dass die Grafik so in das Sichtfeld des Fahrers projiziert wird, dass der Ort der Zielperson (12) markiert wird, wobei die Recheneinheit (40) ausgelegt ist, von den Daten der erfassten Bewegungsmuster charakteristische Größen abzuleiten und mit den von der elektronischen Vorrichtung (122) der Zielperson (12) empfangenen charakteristischen Größen zu vergleichen, wobei die Geste, zu deren Vollziehung die Zielperson (12) aufgefordert wird, einer Wink-Geste entspricht und wobei die abgeleiteten Größen wenigstens der Winkfrequenz und der Winkamplitude entsprechen, wobei die Winkfrequenz und die Winkamplitude der Bewegungsmuster miteinander verglichen werden und dabei eine Abweichung in der Winkfrequenz höher gewichtet wird als eine Abweichung in der Winkamplitude..

3. Kraftfahrzeug, **dadurch gekennzeichnet, dass** das Kraftfahrzeug (10) eine Vorrichtung nach Anspruch 2 aufweist.

## Claims

1. Method for route guidance to a target person, in which method a pick-up person is guided to the target person, wherein the pick-up person and the target person (12) are equipped with electronic devices (200, 122) capable of communicating with each other, wherein the electronic device (122) of the target person (12) sends a pick-up inquiry which is either directly transmitted to the pick-up person or indirectly forwarded to the pick-up person via a central server of a pick-up service, wherein the electronic device (200) of the pick-up person calculates a navigation route to the pick-up location for the target person (12), wherein the electronic device of the pick-up person (200) sends, upon approaching the pick-up location, a request to the electronic device (122) of the target person (12) for the target person (12) to perform a gesture, wherein the electronic device (122) of the target person (12) records the movement data when the gesture is performed and transmits said movement data to the electronic device (200) of the pick-up person, wherein the electronic device (200) of the pick-up person evaluates the data from at least one environment monitoring sensor (150) for typical movement patterns that correspond to the gesture being performed, wherein in the case of a plurality of instances where movement patterns of this gesture are recorded, the individual gesture recording instances are compared to the transmitted movement data and the gesture recording instance that shows the least deviation from the transmitted movement pattern is assigned to the target person (12), **characterized in that** the electronic device (200) of the pick-up person calculates a graphic overlay on a head-up display such that the location of the target person (12) can be indicated by said graphic overlay and the head-up display projects the graphic into the driver's field of vision so as to indicate the location of the target person (12), wherein in the electronic device (122) of the target person (12), characteristic values are derived from the recorded movement data, which characteristic values are transmitted to the electronic device (200) of the pick-up person, and wherein the electronic device (200) of the pick-up person derives the characteristic values from the movement data recorded by itself and compares said characteristic values to the transmitted characteristic values, wherein the gesture that the target person (12) was requested to perform corresponds to a waving gesture and wherein the derived values correspond at least to the waving frequency and the waving amplitude, wherein the waving frequency and the waving amplitude of the movement patterns are compared to each other and a deviation in the waving frequency is weighted more heavily than a deviation in the waving amplitude.

2. Electronic device for the pick-up person for use in the method according to claim 1, comprising a communication module (160), a navigation system (130), a computing unit (40), at least one environment monitoring sensor (150) and a head-up display (20), wherein the navigation system (130) is configured to calculate a route to the pick-up location for the target person (12) and the communication module (160) is configured to send, upon approaching the pick-up location, a request to the electronic device (122) of the target person (12) for the target person to perform a gesture, wherein the communication module (150) is further configured to receive the movement data from the electronic device (122) of the target person (12) when the gesture is performed, wherein the computing unit (40) is configured to extract the movement patterns corresponding to the gesture being performed from the data supplied by the environment monitoring sensor (150) and to compare said movement patterns to the received movement data and wherein the computing unit (40) is further configured to compare, in the case of a plurality of instances where movement patterns of this gesture are recorded, the individual gesture recording instances to the received movement data and to assign to the target person (12) the gesture recording instance that shows the least deviation from the transmitted movement pattern, **characterized in that** the computing unit (40) is further configured to calculate a graphic overlay on the head-up display (20) such that the location of the target person (12) can be indicated by said graphic overlay and wherein the head-up display (20) is configured to project the graphic into the driver's field of vision so as to indicate the location of the target person (12), wherein the computing unit (40) is configured to derive characteristic values from the data relating to the recorded movement patterns and to compare said characteristic values to the characteristic values received from the electronic device (122) of the target person (12), wherein the gesture that the target person (12) was requested to perform corresponds to a waving gesture and wherein the derived values correspond at least to the waving frequency and the waving amplitude, wherein the waving frequency and the waving amplitude of the movement patterns are compared to each other and a deviation in the waving frequency is weighted more heavily than a deviation in the waving amplitude.

3. Motor vehicle, **characterized in that** the motor vehicle (10) comprises a device according to claim 2.

## Revendications

1. Procédé de guidage cible vers une personne cible, dans lequel un agent de collecte est guidé vers la personne cible, dans lequel l'agent de collecte et la personne cible (12) sont équipés de dispositifs électroniques (200, 122) qui sont en mesure de communiquer entre eux, dans lequel une demande de collecte est envoyée de la part du dispositif électronique (122) de la personne cible (12), qui est soit transmise directement à l'agent de collecte, soit transférée indirectement à l'agent de collecte par l'intermédiaire d'un serveur central d'un service de collecte, dans lequel le dispositif électronique (200) de l'agent de collecte calcule un itinéraire de navigation vers le lieu de collecte de la personne cible (12), dans lequel le dispositif électronique de l'agent de collecte (200) envoie une invitation au dispositif électronique (122) de la personne cible (12) à l'approche du lieu de collecte, par laquelle la personne cible (12) est invitée à exécuter un geste, dans lequel les données de mouvement sont détectées par le dispositif électronique (122) de la personne cible (12) lors de l'exécution du geste et transmises au dispositif électronique (200) de l'agent de collecte, dans lequel les données d'au moins un capteur d'observation d'environnement (150) sont analysées par le dispositif électronique (200) de l'agent de collecte à la recherche de modèles de mouvement typiques qui correspondent à l'exécution du geste, dans lequel les détections de gestes individuelles sont comparées aux données de mouvement transmises dans le cas de plusieurs détections de modèles de mouvement de ce geste et la détection de geste qui présente le plus petit écart par rapport au modèle de mouvement transmis, est attribuée à la personne cible (12), **caractérisé en ce que** le dispositif électronique (200) de l'agent de collecte calcule une insertion pour un graphique sur un affichage tête haute de telle sorte que celui-ci permette de marquer le lieu de la personne cible (12) et le graphique est ainsi projeté par l'affichage tête haute dans le champ de vision du conducteur, de telle sorte que le lieu de la personne cible (12) est marqué, dans lequel des variables caractéristiques sont déduites des données de mouvement détectées dans le dispositif électronique (122) de la personne cible (12) et sont transmises au dispositif électronique (200) de l'agent de collecte, et dans lequel les variables caractéristiques sont déduites par le dispositif électronique (200) de l'agent de collecte à partir des données de mouvement détectées de son côté et sont comparées aux variables caractéristiques transmises, dans lequel le geste que la personne cible (12) est invitée à exécuter correspond à un geste de la main et dans lequel les variables déduites correspondent au moins à la fréquence de geste de la main et à l'amplitude de geste de la main, dans lequel la fréquence de geste de la main et l'amplitude de geste de la main des modèles de mouvement sont comparées l'une à l'autre et un écart dans la fréquence de geste de la main est alors pondéré plus fortement qu'un écart dans l'amplitude de geste de la main.

2. Dispositif électronique de l'agent de collecte destiné à être utilisé dans le procédé selon la revendication 1, comportant un module de communication (160), un système de navigation (130), une unité de calcul (40), au moins un capteur d'observation d'environnement (150) et un affichage tête haute (20), dans lequel le système de navigation (130) est adapté pour calculer un itinéraire vers le lieu de collecte de la personne cible (12) et le module de communication (160) est adapté pour envoyer, à l'approche du lieu de collecte, une invitation au dispositif électronique (122) de la personne cible (12), invitant la personne cible à exécuter un geste, dans lequel le module de communication (150) est en outre adapté pour recevoir du dispositif électronique (122) de la personne cible (12) les données de mouvement lors de l'exécution du geste, dans lequel l'unité de calcul (40) est adaptée pour extraire des données fournies par le capteur d'observation d'environnement (150) les modèles de mouvement, qui correspondent à l'exécution du geste et pour les comparer avec les données de mouvement reçues, et dans lequel l'unité de calcul (40) est en outre adaptée, en cas de plusieurs détections de modèles de mouvement de ce geste, pour comparer les détections de geste individuelles avec les données de mouvement reçues et pour attribuer la détection de geste qui présente le plus petit écart par rapport au modèle de mouvement transmis à la personne cible (12), **caractérisé en ce que** l'unité de calcul (40) est en outre adaptée pour calculer une insertion pour un graphique sur l'affichage tête haute (20) de telle sorte que le lieu de la personne cible (12) peut être marqué par celui-ci et dans lequel l'affichage tête haute (20) est adapté de telle sorte que le graphique est projeté dans le champ de vision du conducteur de telle sorte que le lieu de la personne cible (12) est marqué, dans lequel l'unité de calcul (40) est adaptée pour déduire à partir des données des modèles de mouvement détectés des variables caractéristiques et les comparer avec les variables caractéristiques reçues du dispositif électronique (122) de la personne cible (12), dans lequel le geste que la personne cible (12) est invitée à exécuter correspond à un geste de la main et dans lequel les variables déduites correspondent au moins à la fréquence de geste de la main et à l'amplitude de geste de la main, dans lequel la fréquence de geste de la main et l'amplitude de geste de la main des modèles de mouvement sont comparées l'une à l'autre et un écart dans la fréquence de geste de la main est alors pondéré plus fortement qu'un écart dans l'amplitude de geste de la main.

3. Véhicule automobile, **caractérisé en ce que** le véhicule automobile (10) présente un dispositif selon la revendication 2.
